Europäisches Patentamt

European Patent Office

Office européen des brevets

(11) Publication number: **0 421 555 A1**

# EUROPEAN PATENT APPLICATION

(21) Application number: 90202654.1

(22) Date of filing: 04.10.90

(51) Int. Cl.5: **C02F 1/24**, B01D 17/02

(30) Priority: 05.10.89 NL 8902481

(43) Date of publication of application:
**10.04.91 Bulletin 91/15**

(84) Designated Contracting States:
**AT BE CH DE DK ES FR GB GR IT LI LU NL SE**

(71) Applicant: MYLAND HOLDING B.V.
**Dreef 148
NL-2803 HE Gouda(NL)**

(72) Inventor: Middelbeek, Cornelis Gerardus
**Dreef 148
NL-2803 HE Gouda(NL)**

(74) Representative: Konings, Lucien Marie
**Cornelis Joseph et al
OCTROOIBUREAU ARNOLD & SIEDSMA
Sweelinckplein 1
NL-2517 GK Den Haag(NL)**

(54) Method and device for separating liquid and a second substance.

(57) The invention relates to a method for separating at least one liquid, for example water, and a second substance, for instance oil and/or pollutants, from a liquid fluid, for example a suspension or dispersion, by flotation by means of air.

According to the invention, a calm flotation zone [55], in which small air bubbles are present, is separated by means of a bell-jar periphery from a rise zone for large air bubbles [52]. Large air bubbles would disturb the separation because they have a strong tendency to rise, whereby they create agitation more than they carry second substance upwards. The large air bubbles enter the bell-jar. The small air bubbles which adhere to particles of second substance result in an adequate flotation of these particles in a calm zone.

FIG.1

## METHOD AND DEVICE FOR SEPARATING LIQUID AND A SECOND SUBSTANCE

The invention relates to a method for separating at least one liquid, for example water, and a second substance, for instance oil and/or pollutants, from a liquid fluid, for example a suspension or dispersion, by flotation by means of air. Such a method is known.

The invention has for its object to improve the above mentioned method. The method of claim 1 is proposed for this purpose. Therein, a calm flotation zone, in which small air bubbles are present, is separated by means of the bell-jar periphery from a rise zone for large air bubbles. Large air bubbles would disturb the separation because they have a strong tendency to rise, whereby they create agitation more than they carry second substance upwards. The large air bubbles enter the bell-jar. The small air bubbles which adhere to particles of second substance result in an adequate flotation of these particles, assuming they are given sufficient rising time. To this end, flotation must take place in a calm, i.e. little agitated, zone.

The invention also relates to and provides a device as designated in claim 5. Preferred embodiments are indicated in the other claims.

Mentioned and other features of the invention will be elucidated in the description following hereinafter of a number of non-limiting embodiments with reference to a drawing. In the drawing:

Figures 1, 2 and 4 each show a schematic vertical section through different devices according to the invention;

figure 3 shows on a larger scale detail III of figure 1.

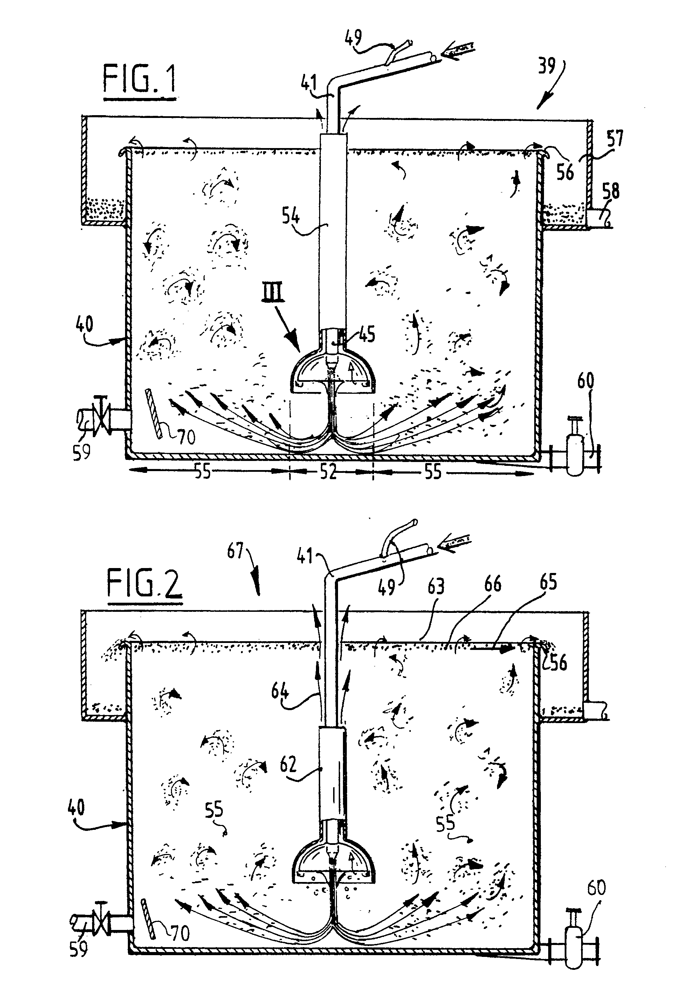

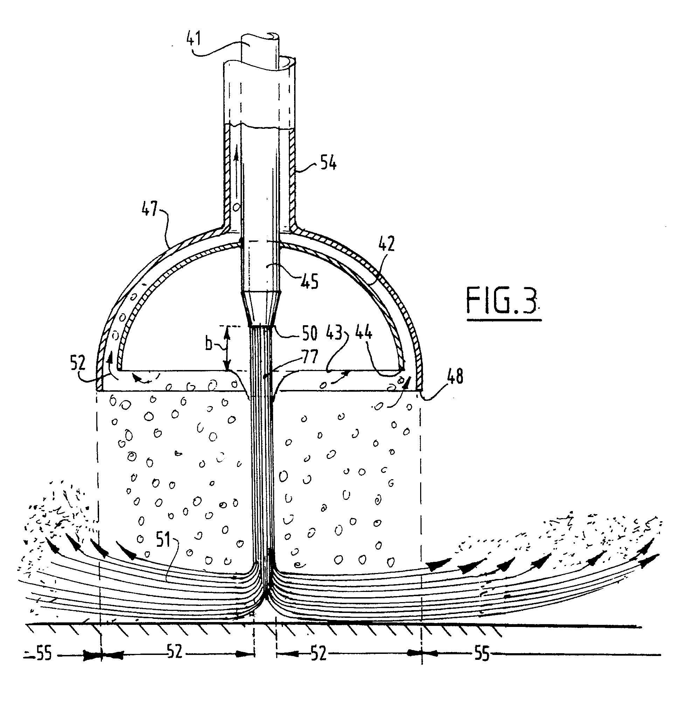

With the method and device 39 of figure 1 a suspension or dispersion feed 41 is vertically disposed in a container 40 for receiving a liquid fluid such as a suspension or dispersion. The feed nozzle 45 thereof (figure 3) debouches into an inner bell-jar 42 at an interval b above a low suspension level 43 which is defined by the bottom edge 44 of the inner bell-jar 42 which is encircled by an outer bell-jar 47, the bottom edge 48 whereof extends more deeply. Suspension, which may or may not be mixed with air (gas) or only air or only water or only oil etc., runs out of the nozzle 45 under pressure, for instance a high pressure of 200 bar. The air is then optionally drawn off through a suction opening 49 of the feed 41. Over the interval b the free jet of liquid 50 comes into contact with the air of the inner bell-jar 42, wherein a portion of this air is taken up and mixed into the jet. The jet will then widen and spread in radial direction. This radial flow 51 therein passes through a rise zone 52 where the large bubbles rise which pass between the inner bell-jar 42 and the outer bell-jar 47.

The excess air moves along the edge 44 out of the inner bell-jar into the outer bell-jar 47 and then rises into an encircling tube 54. To the side of the bell-jar 47 the radial flow thereafter enters a calm flotation zone 55 where the small air bubbles adhere to the suspended of dispersed oil particles and rise. The thus formed floating layer flows over the overflow edge 56 into the receiving vessel 57 with discharge 58. The device 39 further has a discharge 59 for cleaned water behind a screen 70 and optionally a discharge 60 for heavy substance.

The device 67 in figure 2 corresponds with the device 39 of figure 1 except that the rise tube 62 ends beneath the suspension level 63, with the consequence that the rise flow 64 brings about an outward radial flow 65 which drives the floating layer 66 of pollution, for instance oil or grease and/or foam, to the overflow edge 56.

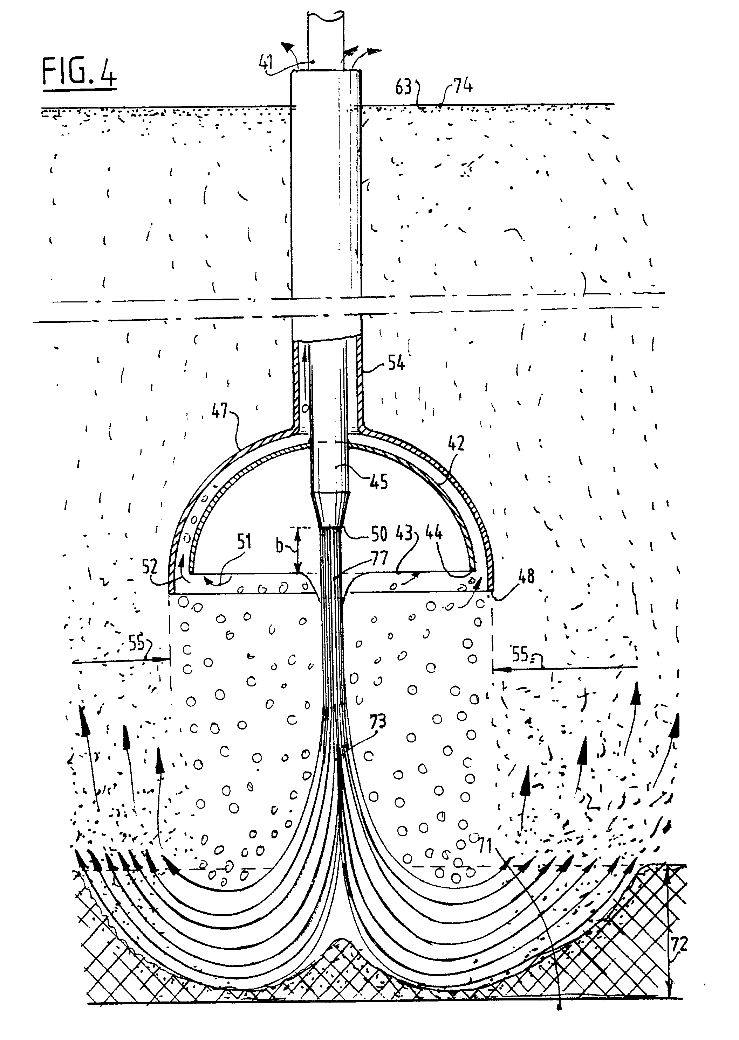

Figure 4 is similar to figure 1 except that the flotation does not take place in a container but in open water, the bottom 71 of which is polluted, for instance with a sludge layer 72. This already settled sludge or other material is then first sprayed loose using a strong jet 73 or other treatment and the particles are flotated by adherence of small air bubbles. The floating layer 74 (and foam) floating on the high liquid level 63 is thereafter collected and discharged by a known method, for instance by skimming, suction and the like or after overflow. A conceivable possibility here could be a floating screen.

The flotation according to the invention is applicable inter alia in the following fields:
- metallurgy (to concentrate finely distributed ores and to separate them from each other and from rock);
- mining;
- treatment of paper factory waste water;
- removing oil and grease from for instance water;
- treatment of waste water.

## Claims

1. Method for separating at least one liquid, for example water, and a second substance, for instance oil and/or pollutants, from a liquid fluid, for example a suspension or dispersion, by flotation by means of air, **characterized in that** a mixture containing at least liquid and air is carried via a bell-jar (42, 47) into the fluid for treatment by directing a jet containing the said liquid onto a low liquid level (43) of the liquid fluid, which level is formed by means of the bell-jar (42, 47) at a level that is lower than an upper liquid level (63) of the liquid fluid, that a low liquid level (43) is created under an upper liquid level (63) of the liquid fluid by means of a bell-jar (42, 47) and that at least one jet (77) containing at least one liquid is directed in the bell-jar (42, 47) onto the low liquid level (43), wherein air is carried out of the bell-jar (42, 47) into the liquid fluid, wherein large air bubbles are collected in the bell-jar (42, 47) and wherein the jet (77) is directed as a mixture flow containing liquid and air past a rise zone (52) for large. air bubbles situated under the bell-jar (42, 47) to a calm flotation zone (55), wherein small air bubbles are present.

2. Method as claimed in claim 1, **characterized in that** air is discharged out of the bell-jar (42, 47) via a line (54, 62) connected to the bell-jar (42, 47).

3. Method as claimed in claim 2, **characterized in that** air is discharged out of the bell-jar (42, 47) via a space present between an inner bell-jar (42) and an outer bell-jar (47).

4. Method as claimed in claim 1, **characterized in that** the jet (77) is directed at a bottom (71) of granular material located under water, for instance sand that is polluted with a second substance (72), such that the second substance (72) is detached from the granular material and is mixed with the water and that the second substance (72) is separated from the water in the calm flotation zone (55) wherein small air bubbles are present.

5. Device for separating at least one liquid, for example water, and a second substance, for instance oil and/or pollutants, from a liquid fluid, for example a suspension or dispersion, by flotation by means of air;
comprising a bell-jar (42, 47) to be held in the liquid fluid below a high liquid level (63) thereof and which is provided with means for creating in the bell-jar (42, 47) a low liquid level (43) located below the high liquid level (63);
and which is provided with at least one jet nozzle (45) for directing a jet (77) from above onto the low liquid level (43).

6. Device as claimed in claim 5, **characterized by** at least one air line (45, 62) connected to the bell-jar (42, 47) for discharging air out of the bell-jar (42, 47).

7. Device (34, 67) as claimed in claim 5, **characterized in that** a feed line (41) for a mixture holding a liquid and air debouches into an inner bell-jar (42) which is encircled by an outer bell-jar (47) connected to at least one air outlet (54, 62).

8. Device (16, 34, 67) as claimed in any of the foregoing claims, comprising a container (1, 40) for receiving the liquid fluid, a discharge (9, 59) for cleaned liquid, a discharge (3, 56) for the second substance and a feed (6, 7, 41) for a mixture holding at least liquid and air.

FIG.1

FIG.2

FIG.3

FIG.4

European
Patent Office

**EUROPEAN SEARCH
REPORT**

Application Number

**EP 90 20 2654**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | GB-A-2 079 618 (AGROTECHNIKA)<br>* Figure 1; page 2, lines 50-65,75-93 *<br>– – – | 1,2,5,6 | C 02<br>F 1/24<br>B 01 D 17/02 |
| A | EP-A-0 250 316 (OTV)<br>* Page 3, lines 16-31; figure 3 *<br>– – – – – | 1,5 | |

TECHNICAL FIELDS
SEARCHED (Int. Cl.5)

C 02 F

The present search report has been drawn up for all claims

| Place of search | Date of completion of search | Examiner |
|---|---|---|
| The Hague | 14 January 91 | KASPERS H.M.C. |